# EUROPEAN PATENT APPLICATION

(11) **EP 4 668 567 A1**
(43) Date of publication of application: **24.12.2025**
(21) Application number: 23922201.1
(22) Date of filing: 23.05.2023
(51) Int. Cl.: H02M 7/487

(54) **CONVERTER AND ANPC CIRCUIT DRIVING METHOD THEREFOR**

(30) Priority: 17.02.2023 CN 202310153254
(71) Applicant: Sungrow Power Supply Co., Ltd., Hefei, Anhui 230088 (CN)
(72) Inventor: ZHUANG, Yuan, Hefei, Anhui 230088 (CN); ZHUANG, Fushuai, Hefei, Anhui 230088 (CN); CHANG, Renhe, Hefei, Anhui 230088 (CN); ZHUANG, Jiacai, Hefei, Anhui 230088 (CN)
(74) Representative: Epping - Hermann - Fischer
(86) International application number: PCT/CN2023/095746
(87) International publication number: WO 2024/169074

(57) **Abstract**

The present application provides a converter and an ANPC circuit driving method therefor. The ANPC circuit driving method comprises: first, with the goal of enabling an ANPC circuit in a converter to respectively use inner transistors and outer transistors to bear switching loss in two half switching periods of a switching period, determining an output state switching sequence of the ANPC circuit; and then, generating and outputting switching transistor control signals of the ANPC circuit according to the output state switching sequence. Thus, the ANPC circuit can realize the balance of switching loss of the inner and outer transistors; moreover, the balance granularity of the switching loss is a half switching period, so that the balance effect is fine, and the loss fluctuation is low.

## Description

This application claims priority to Chinese Patent Application No. 202310153254.6 titled "CONVERTER AND ANPC CIRCUIT DRIVING METHOD THEREFOR", filed on February 17, 2023 with the China National Intellectual Property Administration (CNIPA), which is incorporated herein by reference in its entirety.

### FIELD

The present disclosure relates to the technical field of power electronics, and in particular to a converter and a method for driving an ANPC circuit of the converter.

### BACKGROUND

Compared with a conventional NPC (Neutral Point Clamped) converter, an ANPC (Active neutral point clamped) converter is realized by using a fully controlled switching device (and a freewheeling diode thereof) instead of a diode for implementing midpoint clamping. Hence, the ANPC converter allows a redundant drive distribution manner and thereby a system control freedom is improved. In a single-phase topology of the converter, a switching transistor connected to a positive electrode or negative electrode of a direct-current side is referred to as an outer transistor, a switching transistor connected to an alternating-current side is referred to as an inner transistor, and a switching transistor connected to a neutral point on the direct-current side is referred to as a clamping transistor.

In the ANPC single-phase circuit, there are many drive distribution manners for six fully controlled switching devices, such as a drive distribution manner ANPC-1 in which the outer transistor and the clamping transistor are turned on or off at a high frequency, and the inner transistor is turned on or off at a power frequency, and a drive distribution manner ANPC-2 in which the inner transistor is turned on or off at a high frequency and the other transistor are turned on or off at a power frequency. However, in the manner ANPC-1, the outer transistor is greater than the inner transistor in switching loss; and in the manner ANPC-2, the inner transistor is greater than the outer transistor in switching loss. Neither of the manners can balance the switching losses of the devices.

### SUMMARY

A converter and a method for driving an ANPC circuit of the converter are provided according to the present disclosure, to balance switching losses of devices.

The following technical solutions are provided according to the present disclosure for achieving the above objective.

In a first aspect of the present disclosure, a method for driving an ANPC circuit of a converter is provided. The method includes: determining an output state switching sequence of the ANPC circuit, aiming at an inner transistor and an outer transistor among switching transistors in the ANPC circuit of the converter bearing a switching loss of the ANPC circuit in the converter within two half switching cycles of a switching cycle, respectively; and generating control signals for switching transistors in the ANPC circuit based on the output state switching sequence, and outputting the control signals.

**In** an embodiment, the determining an output state switching sequence of the ANPC circuit, aiming at an inner transistor and an outer transistor among switching transistors in the ANPC circuit of the converter bearing a switching loss within two half switching cycles of a switching cycle, respectively includes: determining zero-level output states of the output state switching sequence within the two half switching cycles of the switching cycle of the ANPC circuit, the zero-level output states including a first zero-level output state in which the inner transistor bears the switching loss and a second zero-level output state in which the outer transistor bears the switching loss.

In an embodiment, before the determining an output state switching sequence of the ANPC circuit, the method further includes: combining with an objective of balancing an on-state loss borne by the inner transistor.

In an embodiment, the determining an output state switching sequence of the ANPC circuit, aiming at an inner transistor and an outer transistor among switching transistors in the ANPC circuit of the converter bearing a switching loss within two half switching cycles of a switching cycle, respectively includes: determining zero-level output states of the output state switching sequence within the two half switching cycles of the switching cycle of the ANPC circuit, the zero-level output states including a first zero-level output state in which the inner transistor bears the switching loss, a second zero-level output state in which the outer transistor bears the switching loss, and a third zero-level output state in which a phase current flows into or flows out of a bridge arm through two parallel-connected branches.

In an embodiment, in the ANPC circuit, a quantity of the outer transistor is two, and the two outer transistors include a first switching transistor connected to a positive electrode of a direct-current side, and a fourth switching transistor connected to a negative electrode of the direct-current side; a quantity of the inner transistor is two, and the two inner transistors include a second switching transistor connected between the first switching transistor and an alternating-current side, and a third switching transistor connected between the alternating-current side and the fourth switching transistor; a quantity of a clamping transistor is two, and the two clamping transistors include a fifth switching transistor connected between the first switching transistor and a neutral point of the direct-current side, and a sixth switching transistor connected between the neutral point of the direct-current side and the fourth switching transistor. Within a positive half-cycle of an output voltage of the alternating-current side of the ANPC circuit, in the first zero-level output state, the first switching transistor, the third switching transistor and the sixth switching transistor are on, and the other switching transistors are off. Within a negative half-cycle of the output voltage of the alternating-current side of the ANPC circuit, in the first zero-level output state, the second switching transistor, the fourth switching transistor and the fifth switching transistor are on, and the other switching transistors are off.

In an embodiment, in the ANPC circuit, a quantity of the outer transistor is two, and the two outer transistors include a first switching transistor connected to a positive electrode of a direct-current side, and a fourth switching transistor connected to a negative electrode of the direct-current side; a quantity of the inner transistor is two, and the two inner transistors include a second switching transistor connected between the first switching transistor and an alternating-current side, and a third switching transistor connected between the alternating-current side and the fourth switching transistor; a quantity of a clamping transistor is two, and the two clamping transistors include a fifth switching transistor connected between the first switching transistor and a neutral point of the direct-current side, and a sixth switching transistor connected between the neutral point of the direct-current side and the fourth switching transistor. Within a positive half-cycle of an output voltage of the alternating-current side of the ANPC circuit, in the second zero-level output state, the second switching transistor, the third switching transistor and the sixth switching transistor are on, and the other switching transistors are off. Within a negative half-cycle of the output voltage of the alternating-current side of the ANPC circuit, in the second zero-level output state, the second switching transistor, the third switching transistor and the fifth switching transistor are on, and the other switching transistors are off.

In an embodiment, in the ANPC circuit, a quantity of the outer transistor is two, and the two outer transistors include a first switching transistor connected to a positive electrode of a direct-current side, and a fourth switching transistor connected to a negative electrode of the direct-current side; a quantity of the inner transistor is two, and the two inner transistors include a second switching transistor connected between the first switching transistor and an alternating-current side, and a third switching transistor connected between the alternating-current side and the fourth switching transistor; a quantity of a clamping transistor is two, and the two clamping transistors include a fifth switching transistor connected between the first switching transistor and a neutral point of the direct-current side, and a sixth switching transistor connected between the neutral point of the direct-current side and the fourth switching transistor. Within a positive half-cycle of an output voltage of the alternating-current side of the ANPC circuit, in the third zero-level output state, the third switching transistor, the fifth switching transistor and the sixth switching transistor are on, and the other switching transistors are off. Within a negative half-cycle of the output voltage of the alternating-current side of the ANPC circuit, in the third zero-level output state, the second switching transistor, the fifth switching transistor and the sixth switching transistor are on, and the other switching transistors are off.

In an embodiment, the output state switching sequence indicates that: the third zero-level output state, the first zero-level output state, a positive level output state or a negative level output state, the second zero-level output state, and the third zero-level output state appear in sequence; or, the third zero-level output state, the second zero-level output state, a positive level output state or a negative level output state, the first zero-level output state, and the third zero-level output state appear in sequence.

In an embodiment, the phase current flows into the bridge arm through two parallel-connected branches in the third zero-level output state within a positive half-cycle of an output voltage of an alternating-current side of the ANPC circuit; and the phase current flows out of the bridge arm through two parallel-connected branches in the third zero-level output state within a negative half-cycle of the output voltage of the alternating-current side of the ANPC circuit.

In an embodiment, the generating control signals for switching transistors in the ANPC circuit based on the output state switching sequence, and outputting the control signals includes: generating, for each of the switching transistors in the ANPC circuit, the control signal for the switching transistor based on on-off states of the switching transistor in the respective output states in the output state switching sequence, and outputting the control signals; or, generating, for each of the switching transistors in the ANPC circuit, the control signal for the switching transistor by comparing with a carrier wave, aiming at achieving the output state switching sequence, and outputting the control signals.

In a second aspect of the present disclosure, a converter is provided. The converter includes a main circuit and a controller.

The main circuit includes at least one ANPC circuit; and the main circuit is controlled by the controller, and the controller is configured to perform the method for driving an ANPC circuit of a converter according to any embodiment of the first aspect.

In an embodiment, a quantity of the switching transistors in the ANPC circuit is six; where a first switching transistor, a second switching transistor, a third switching transistor, and a fourth switching transistor among the six switching transistors are connected in series in the sequence; a terminal of the first switching transistor is connected to a positive electrode of a direct-current side of the ANPC circuit, and a terminal of the fourth switching transistor is connected to a negative electrode of the direct-current side of the ANPC circuit; the first switching transistor and the fourth switching transistor serve as two outer transistors of the ANPC circuit; a connection point of the second switching transistor and the third switching transistor is connected to an alternating-current side of the ANPC circuit; and the second switching transistor and the third switching transistor serve as two inner transistors of the ANPC circuit; a connection point of the first switching transistor and the second switching transistor is connected to a neutral point of the direct-current side of the ANPC circuit via a fifth switching transistor; a connection point of the third switching transistor and the fourth switching transistor is connected to the neutral point of the direct-current side of the ANPC circuit via a sixth switching transistor; and the fifth switching transistor and the sixth switching transistor serve as two clamping transistors of the ANPC circuit.

In an embodiment, a quantity of the ANPC circuit in the main circuit is three; and direct-current sides of the ANPC circuits are connected in parallel to each other, and the alternating-current side of each of the ANPC circuits serves as a phase of an alternating-current side of the main circuit.

In the method for driving an ANPC circuit of a converter according to the present disclosure, the output state switching sequence of the ANPC circuit is determined aiming at an inner transistor and an outer transistor among switching transistors in the ANPC circuit of the converter bearing a switching loss within two half switching cycles of a switching cycle, respectively; and the control signals for switching transistors in the ANPC circuit are generated based on the output state switching sequence, and the control signals are outputted, so that the ANPC circuit can balance the switching losses of the inner transistor and the outer transistor, and the balancing granularity of the switching loss is half the switching cycle, achieving a fine balancing effect and low loss fluctuation.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only some embodiments of the present disclosure, and other drawings may be obtained by those skilled in the art from the drawings without any creative effort.
FIG. 1 shows a topology diagram of an ANPC circuit according to the conventional technology;
FIG. 2 is a schematic diagram of a drive distribution manner of an ANPC circuit according to the conventional technology;
FIG. 3 is a schematic diagram of another drive distribution manner of an ANPC circuit according to the conventional technology;
FIG. 4 is a schematic diagram of a signal waveform within a positive half-cycle of an output voltage in a two-mode drive distribution manner according to an embodiment of the present disclosure;
FIG. 5 is a schematic diagram of a signal waveform within a positive half-cycle of an output voltage in a two-mode drive distribution manner according to another embodiment of the present disclosure;
FIG. 6 is a schematic diagram of a signal waveform within a negative half-cycle of an output voltage in a two-mode drive distribution manner according to an embodiment of the present disclosure;
FIG. 7 is a schematic diagram of a signal waveform within a negative half-cycle of an output voltage in a two-mode drive distribution manner according to another embodiment of the present disclosure;
FIG. 8 is a flow chart of a method for driving an ANPC circuit of a converter according to an embodiment of the present disclosure;
FIG. 9 is a schematic diagram of a current path during a phase current flowing into a bridge arm in a state 0+ according to an embodiment of the present disclosure;
FIG. 10 is a schematic diagram of a current path during a phase current flowing out of a bridge arm in a state 0+ according to an embodiment of the present disclosure;
FIG. 11 is a schematic diagram of a current path during a phase current flowing into a bridge arm in a state 0- according to an embodiment of the present disclosure;
FIG. 12 is a schematic diagram of a current path during a phase current flowing out of a bridge arm in a state 0- according to an embodiment of the present disclosure; and
FIG. 13 is a schematic diagram of a signal waveform for achieving an output state switching sequence 0+→0+in→P→0+out→0+ by comparing with a carrier wave according to an embodiment of the present disclosure.

### DETAILED DESCRIPTION

Technical solutions of embodiments of the present disclosure are described clearly and completely below in conjunction with the drawings of the embodiments of the present disclosure. Apparently, the embodiments described below are only some embodiments, rather than all the embodiments of the present disclosure. Any other embodiments obtained by those skilled in the art based on the embodiments of the present disclosure, without any creative effort, shall fall within the protection scope of the present disclosure.

In the present disclosure, terms of "include", "comprise" or any other variants are intended to be non-exclusive. Therefore, a process, method, article or device including a series of elements includes not only the elements but also other elements that are not enumerated, or further includes the elements inherent for the process, method, article or device. Unless expressively limited otherwise, the statement "comprising (including) one..." does not exclude existence of other similar elements in the process, method, article or device.

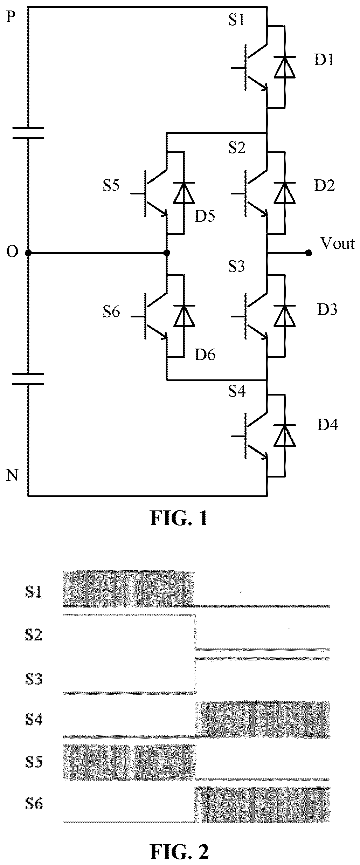

As shown in FIG. 1, an ANPC circuit includes six switching transistors (shown as S1 to S6), and each of the switching transistors has a freewheeling diode (shown as D1 to D6). A first switching transistor S1, a second switching transistor S2, a third switching transistor S3, and a fourth switching transistor S4 among the six switching transistors are connected in series in sequence. A terminal of the first switching transistor S1 is connected to a positive electrode P of a direct-current side of the ANPC circuit, and a terminal of the fourth switching transistor S4 is connected to a negative electrode N of the direct-current side of the ANPC circuit. A connection point of the second switching transistor S2 and the third switching transistor S3 is connected to an alternating-current side of the ANPC circuit (having an output voltage Vout). A connection point of the first switching transistor S1 and the second switching transistor S2 is connected to a neutral point O of the direct-current side of the ANPC circuit via a fifth switching transistor S5. A connection point of the third switching transistor S3 and the fourth switching transistor S4 is connected to the neutral point O of the direct-current side of the ANPC circuit via a sixth switching transistor S6. The first switching transistor S1 and the fourth switching transistor S4, which are respectively connected to the positive electrode and the negative electrode (shown as P and N in FIG. 1) of the direct-current side, are referred to as outer transistors. The second switching transistor S2 and the third switching transistor S3, which are connected to the alternating-current side, are referred to as inner transistors. The fifth switching transistor S5 and the sixth switching transistor S6, which are connected to the neutral point O of the direct-current side, are referred to as clamping transistors.

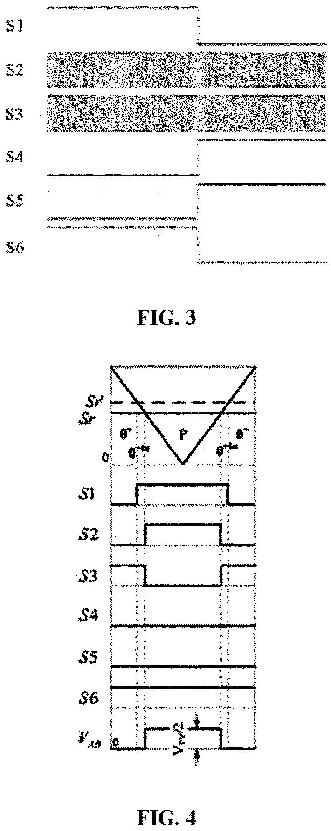

In a drive distribution manner ANPC-1 (as shown in FIG. 2), the outer transistors (S1 and S4) and the clamping transistors (S5 and S6) are turned on or off at a high frequency, and the inner transistors (S2 and S3) are turned on or off at a power frequency. In this case, the outer transistors are greater than the inner transistors in switching loss. In a drive distribution manner ANPC-2 (shown as in FIG. 3), the inner transistors (S2 and S3) are turned on or off at a high frequency, and the other transistors (S1, S4, S5, and S6) are turned on or off at a power frequency. In this case, the inner transistors are greater than the outer transistors in switching loss. Therefore, neither of these two drive distribution manners can balance the switching losses of the devices.

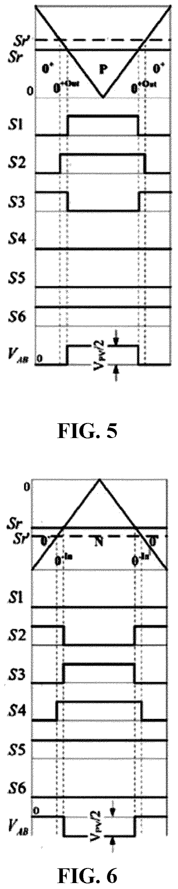

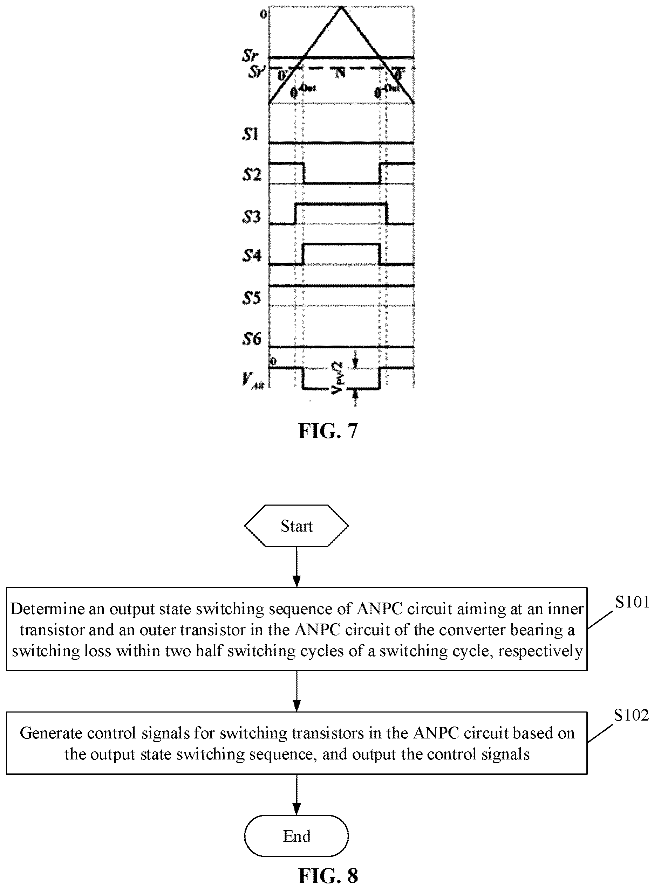

From researches, the output voltage Vout at a midpoint (that is, the alternating-current side) of a phase bridge arm of the ANPC circuit is in a commutation process of a sequence 0→P→0→N→0. For the inner transistor and the outer transistor, a switching transistor that is turned on earlier does not cause a change in a commutation path, and a flow path of the current changes until a switching transistor sequenced later is turned on. Therefore, no turn-on loss is caused in a process of turning on a switching transistor early due to no current, and a turn-on loss is caused in a process of turning on a switching transistor later due to presence of current. Similarly, a switching transistor that is turned off early bears a turn-off loss due to a current flowing through the switching transistor. Therefore, both the switching transistor that is turned off early and the switching transistor that is turned on late bear the switching loss. Based on this principle, a two-mode drive distribution manner may be adopted in order to actively balance the switching losses of devices in the ANPC circuit. The two modes defined here include a stress-in mode and a stress-out mode. The stress-in mode refers to a mode in which the inner transistor bears the switching loss, and the stress-out mode refers to a mode in which the outer transistor bears the switching loss. In the two-mode drive distribution manner, drives for the six switching transistors corresponding to the stress-in mode and the stress-out mode are formed by a pulse width modulation method based on comparison of a carrier wave. As shown in FIG. 4 to FIG. 7, V_{AB} represents an output voltage Vout of the alternating-current side, and V_{PV} represents a voltage between the positive electrode and the negative electrode of the direct-current side. An example is provided here based on a positive half-cycle of the output voltage Vout of the alternating-current side. A modulation wave Sr and an auxiliary modulation wave Sr' are set, where Sr'>Sr. As shown in FIG. 4, the modulation wave Sr is compared with a triangular carrier wave to generate a drive for the switching transistor S2, and the auxiliary modulation wave Sr' is compared with the triangular carrier wave to generate a drive for the switching transistor S1. Within a current switching cycle, the switching transistor S1 is turned on early and turned off late, and the switching transistor S2 is turned on late and turned off early (corresponding to an output state phase 0+In that appears twice in the figure), corresponding to the stress-in mode where the switching transistor S2 bears the switching loss. On the contrary, as shown in FIG. 5, the modulation wave Sr is compared with the triangular carrier wave to generate a drive for the switching transistor S1, and the auxiliary modulation wave Sr' is compared with the triangular carrier wave to generate a drive for the switching transistor S2. In this case, within a current switching cycle, the switching transistor S2 is turned on early and turned off late, and the switching transistor S1 is turned on late and turned off early (corresponding to an output state phase 0+Out that appears twice in the figure), corresponding to the stress-out mode where the switching transistor S1 bears the switching loss. In practice, a proportion of the stress-in mode and the stress-out mode is adjusted, for example, the proportion of each of the stress-in mode and the stress-out mode is 50%, thereby balancing the switching losses of the inner transistor and the outer transistor. Situation of a negative half-cycle (as shown in FIG. 6 and FIG. 7) of the output voltage Vout of the alternating-current side may be analyzed similarly based on symmetry, and is not described in detail here.

According to the two-mode drive distribution manner, the stress-in mode symmetrically appears twice within each switching cycle (two output state phases 0+In in FIG. 4 and two output state phases 0-In in FIG. 6), or the stress-out mode symmetrically appears twice within each switching cycle (two output state phases 0+Out in FIG. 5 and two output state phases 0-Out in FIG. 7). As a result, the switching loss has a large balancing granularity, and the balancing granularity is one switching cycle. This disadvantage becomes more obvious as a carrier wave ratio decreases, resulting in a degraded balancing performance in loss.

A method for driving an ANPC circuit of a converter is provided according to the present disclosure, to balance switching losses of devices, and to reduce the balancing granularity of the switching loss.

Referring to FIG. 8, the method for driving an ANPC circuit of a converter includes S101 to S102.

In S101, an output state switching sequence of the ANPC circuit is determined, aiming at an inner transistor and an outer transistor among switching transistors in the ANPC circuit of the converter bearing a switching loss within two half switching cycles of a switching cycle, respectively.

The switching cycle of the ANPC circuit includes two half switching cycles. The inner transistor and the outer transistor in the ANPC circuit bear the switching loss within the two half switching cycles, respectively, thereby balancing the switching losses of the inner transistor and the outer transistor.

Zero-level output states of different switching combinations can enable the inner transistor and the outer transistor to separately bear the switching loss. That is, the S101 may specifically include: determining zero-level output states of the output state switching sequence within the two half switching cycles of the switching cycle of the ANPC circuit, the zero-level output states including a first zero-level output state in which the inner transistor bears the switching loss and a second zero-level output state in which the outer transistor bears the switching loss.

In practice, the zero-level output state within the first half switching cycle of the switching cycle includes the first zero-level output state, and the zero-level output state within the second half switching cycle of the switching cycle includes the second zero-level output state. Alternatively, the zero-level output state within the first half switching cycle of the switching cycle includes the second zero-level output state, and the zero-level output state within the second half switching cycle of the switching cycle includes the first zero-level output state. The zero-level output state is not limited here, depending on an application environment.

Within a positive half-cycle of the output voltage Vout of the alternating-current side, the first zero-level output state is denoted as 0+in, and the ANPC circuit has a switching combination as follows: the first switching transistor S1, the third switching transistor S3 and the sixth switching transistor S6 are on, and the other switching transistors are off. The second zero-level output state is denoted as O+out, and the ANPC circuit has a switching combination as follows: the second switching transistor S2, the third switching transistor S3 and the sixth switching transistor S6 are on, and the other switching transistors are off.

Within a negative half-cycle of the output voltage Vout of the alternating-current side, the first zero-level output state is denoted as 0-in, and the ANPC circuit has a switching combination as follows: the second switching transistor S2, the fourth switching transistor S4 and the fifth switching transistor S5 are on, and the other switching transistors are off. The second zero-level output state is denoted as 0-out, and the ANPC circuit has a switching combination as follows: the second switching transistor S2, the third switching transistor S3 and the fifth switching transistor S5 are on, and the other switching transistors are off.

In S102, control signals for switching transistors in the ANPC circuit are generated based on the output state switching sequence, and the control signals are outputted.

The control signals for the switching transistors are transmitted by respective drive circuits to drive the switching transistors.

With the method for driving an ANPC circuit of a converter according to the embodiment, switching losses of the inner transistor and the outer transistor in the ANPC circuit can be balanced through the above process, and the stress-in mode and the stress-out mode are flexibly selected within each half switching cycle, reducing the balancing granularity of the switching loss to the half switching cycle, achieving a fine balancing effect and low loss fluctuation.

It should be noted that the two-mode drive distribution manner has a further problem of considering only the balancing of switching loss, without actively improving balance of on-state losses. As the on-state loss and the switching loss are in a same order of magnitude, another method for driving the ANPC circuit is provided according to an embodiment. Based on the previous embodiment, before determining the output state switching sequence of the ANPC circuit in S101, the method further includes: combining with an objective of balancing an on-state loss borne by the inner transistor. That is, the S101 includes: determining the output state switching sequence of the ANPC circuit, aiming at the inner transistor and the outer transistor in the ANPC circuit bearing the switching loss within two half switching cycles of the switching cycle, respectively, and combining with the objective of balancing the on-state loss borne by the inner transistor.

In the implementation of the S101, zero-level output states of the output state switching sequence within the two half switching cycles of the switching cycle of the ANPC circuit are determined. The zero-level output states include a first zero-level output state in which the inner transistor bears the switching loss, a second zero-level output state in which the outer transistor bears the switching loss, and a third zero-level output state in which a phase current flows into or flows out of a bridge arm through two parallel-connected branches.

Within a positive half-cycle of the output voltage Vout of the alternating-current side, the third zero-level output state is denoted as 0+, and the ANPC circuit has a switching combination as follows: the third switching transistor S3, the fifth switching transistor S5 and the sixth switching transistor S6 are on, and the other switching transistors are off.

Within a negative half-cycle of the output voltage Vout of the alternating-current side, the third zero-level output state is denoted as 0-, and the ANPC circuit has a switching combination as follows: the second switching transistor S2, the fifth switching transistor S5 and the sixth switching transistor S6 are on, and the other switching transistors are off.

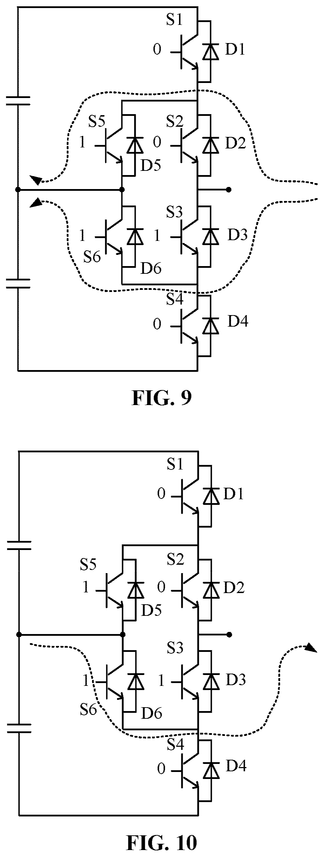

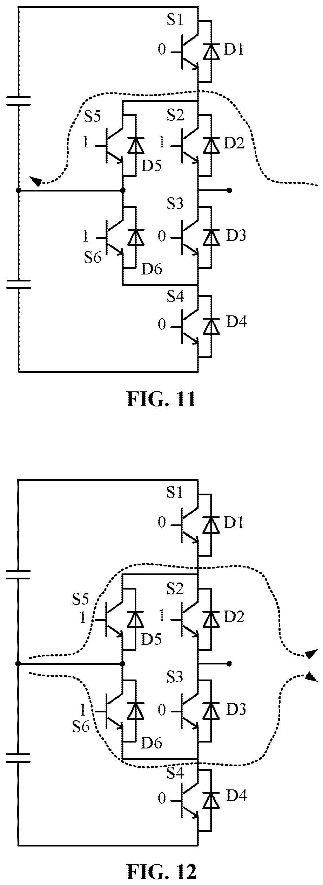

Referring to FIG. 9 and FIG. 10, the phase current flows into the bridge arm through two parallel-connected branches in the third zero-level output state within the positive half-cycle of the output voltage of the alternating-current side of the ANPC circuit (as shown in FIG. 9). Therefore, a current flowing through a device on each of the branches is half of the phase current, balancing the on-state loss and reducing a current stress. Referring to FIG. 11 and FIG. 12, the phase current flows out of the bridge arm through two parallel-connected branches in the third zero-level output state within the negative half-cycle of the output voltage of the alternating-current side of the ANPC circuit (as shown in FIG. 12). Therefore, a current flowing through a device on each of the branches is half of the phase current, balancing the on-state loss and reducing the current stress.

In this embodiment, a zero-level parallel-connected branch is constructed, actively balancing the turn-on loss by optimizing the switching combination for outputting a zero level. In this case, the method for driving an ANPC circuit can both balance the switching losses and actively balance the on-state losses.

As shown in FIG. 1, in the ANPC circuit, a quantity of the outer transistor is two, and the two outer transistors include the first switching transistor S1 connected to the positive electrode P of the direct-current side, and the fourth switching transistor S4 connected to the negative electrode N of the direct-current side; a quantity of the inner transistor is two, and the two inner transistors include the second switching transistor S2 connected between the first switching transistor S1 and the alternating-current side, and the third switching transistor S3 connected between the alternating-current side and the fourth switching transistor S4; a quantity of a clamping transistor is two, and the two clamping transistors include the fifth switching transistor S5 connected between the first switching transistor S1 and a neutral point O of the direct-current side, and the sixth switching transistor S6 connected between the neutral point O of the direct-current side and the fourth switching transistor S4. Regarding the output states mentioned in the above embodiment, the following switching combinations are provided.

Within the positive half-cycle of the output voltage Vout of the alternating-current side of the ANPC circuit: in the first zero-level output state 0+in, the first switching transistor S1, the third switching transistor S3 and the sixth switching transistor S6 are on, and the other switching transistors are off; in the second zero-level output state 0+out, the second switching transistor S2, the third switching transistor S3 and the sixth switching transistor S6 are on , and the other switching transistor are off; in the third zero-level output state 0+, the third switching transistor S3, the fifth switching transistor S5 and the sixth switching transistor S6 are on, and the other switching transistors are off; and in a positive level output state P, the first switching transistor S1, the second switching transistor S2 and the sixth switching transistor S6 are on, and the other switching transistors are off.

Within the negative half-cycle of the output voltage Vout of the alternating-current side of the ANPC circuit: in the first zero-level output state 0-in, the second switching transistor S2, the fourth switching transistor S4 and the fifth switching transistor S5 are on, and the other switching transistors are off; in the second zero-level output state 0-out, the second switching transistor S2, the third switching transistor S3 and the fifth switching transistor S5 are on, and the other switching transistor are off; in the third zero-level output state 0-, the second switching transistor S2, the fifth switching transistor S5 and the sixth switching transistor S6 are on, and the other switching transistors are off; and in a negative level output state N, the third switching transistor S3, the fourth switching transistor S4 and the fifth switching transistor S5 are on, and the other switching transistors are off.

That is, combinations of switching states are provided in the embodiment. As shown in Table 1, switching states of the switching transistors S1 to S6 in eight different output states of the bridge arm are listed, where 1 represents on and 0 represents off.

**Table 1 Combinations of Switching States**

| Output state | S1 | S2 | S3 | S4 | S5 | S6 |
|---|---|---|---|---|---|---|
| P | 1 | 1 | 0 | 0 | 0 | 1 |
| O+in | 1 | 0 | 1 | 0 | 0 | 1 |
| O+out | 0 | 1 | 1 | 0 | 0 | 1 |
| O+ | 0 | 0 | 1 | 0 | 1 | 1 |
| O- | 0 | 1 | 0 | 0 | 1 | 1 |
| O-out | 0 | 1 | 1 | 0 | 1 | 0 |
| O-in | 0 | 1 | 0 | 1 | 1 | 0 |
| N | 0 | 0 | 1 | 1 | 1 | 0 |

There are six zero-level output states in Table 1, listed as follows:
O+in: the first zero-level output state in which the inner transistor bears the switching loss within the positive half-cycle of the output voltage of the alternating-current side;
O+out: the second zero-level output state in which the outer transistor bears the switching loss within the positive half-cycle of the output voltage of the alternating-current side;
O+: the third zero-level output state within the positive half-cycle of the output voltage of the alternating-current side;
O-in: the first zero-level output state in which the inner transistor bears the switching loss within the negative half-cycle of the output voltage of the alternating-current side;
O-out: the second zero-level output state in which the outer transistor bears the switching loss within the negative half-cycle of the output voltage of the alternating-current side;
O-: the third zero-level output state within the negative half-cycle of the output voltage of the alternating-current side.

Under the six zero-level output states, output levels of the bridge arm are all 0, with different commutation paths and corresponding to different switching losses and different on-state losses. The switching losses and the on-state losses can be balanced by the combinations of the six zero-level output states.

Regarding the switching loss, the inner transistor bears the switching loss in the state O+in during outputting 0 level within the positive half-cycle; the outer transistor bears the switching loss in the state O+out during outputting 0 level within the positive half-cycle; the inner transistor bears the switching loss in the state O-in during outputting 0 level within the negative half-cycle; and the outer transistor bears the switching loss in the state O-out during outputting 0 level within the negative half-cycle.

Regarding the on-state loss, FIG. 9 and FIG. 10 illustrate phase currents in the state O+ during outputting 0 level within the positive half-cycle. A phase current flows into the bridge arm though two parallel-connected current branches, and thus a current flowing through a device in each of the branches is half of the phase current, balancing the on-state losses and reducing the current stress. Similarly, FIG. 11 and FIG. 12 illustrate phase currents in the state O- during outputting 0 level within the negative half-cycle. A phase current flows out of the bridge arm though two parallel-connected current branches, and thus a current flowing through a device in each of the branches is half of the phase current, balancing the on-state losses and reducing the current stress.

Based on the idea of balancing the switching losses and balancing the on-state losses by different zero-level output states, the following drive distribution manners are determined. Within the positive half-cycle of the output voltage of the alternating-current side, the output state switching sequence is determined as O+→O+in/O+out→P→O+out/O+in→O+. Within the negative half-cycle of the output voltage of the alternating-current side, the output state switching sequence is determined as O-→O-in/O-out→P→O-out/O-in→O-. Then, drives for the switching transistors S1 to S6 are determined based on the output states in Table 1. That is, based on the above embodiments, some examples of the output state switching sequence are provided in the embodiment, as listed below.
(1) Within the positive half-cycle of the output voltage Vout of the alternating-current side of the ANPC circuit, the output state switching sequence indicates that the third zero-level output state, the first zero-level output state, the positive level output state, the second zero-level output state, and the third zero-level output state appear in sequence, that is, 0+→0+in→P→0+out→0+.
(2) Within the positive half-cycle of the output voltage Vout of the alternating-current side of the ANPC circuit, the output state switching sequence indicates that: the third zero-level output state, the second zero-level output state, the positive level output state, the first zero-level output state, and the third zero-level output state appear in sequence, that is, 0+→0+out→P→0+in→0+.
(3) Within the negative half-cycle of the output voltage Vout of the alternating-current side of the ANPC circuit, the output state switching sequence indicates that the third zero-level output state, the first zero-level output state, the negative level output state, the second zero-level output state, and the third zero-level output state appear in sequence, that is, 0-→0-in→N→0-out→0-.
(4) Within the negative half-cycle of the output voltage Vout of the alternating-current side of the ANPC circuit, the output state switching sequence indicates that: the third zero-level output state, the second zero-level output state, the negative level output state, the first zero-level output state appear in sequence, and the third zero-level output state, that is, 0-→0-out→N→0-in→0-.

The method for driving an ANPC circuit according to the embodiment is different from the conventional technology in terms of the zero-level switching combination and zero-level freewheeling loop. Specifically, the zero-level output states 0+ and 0- are set in the output state switching sequence, actively improving the balance of on-state losses. Additionally, the states 0+in or 0+out and 0-in or 0-out can be flexibly determined, actively improving the balance of switching losses and reducing the balancing granularity of switching losses.

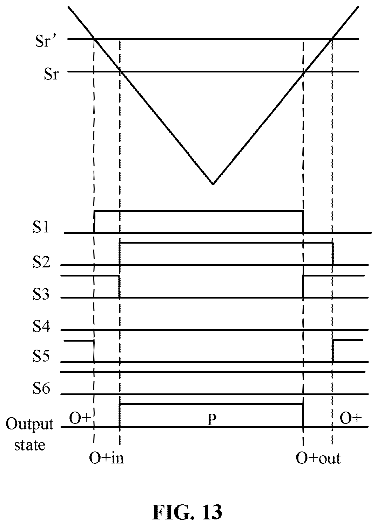

FIG. 13 illustrates an output state switching sequence: 0+→0+in→P→0+out→0+ within a switching cycle of the output of the bridge arm. In this case, the inner transistor bears the switching loss within the first half of the switching cycle, and the outer transistor bears the switching loss within the second half of the switching cycle. In this way, the distribution granularity of the switching loss is reduced.

Based on the above embodiments, in an embodiment, S102 in the method for driving an ANPC circuit may include: generating, for each of the switching transistors in the ANPC circuit, the control signal for the switching transistor based on on-off states of the switching transistor in the respective output states in the output state switching sequence, and outputting the control signals. That is, a pulse for each switching transistor may be directly obtained from Table 1 based on the output voltage of the bridge arm. Such implementation is more flexible than the two-mode drive distribution manner.

Alternatively, S102 may include: generating, for each of the switching transistors in the ANPC circuit, the control signal for the switching transistor by comparing with a carrier wave aiming at achieving the output state switching sequence, and outputting the control signals. FIG. 13 illustrates a process of implementing an output state switching sequence of 0+→0+in→P→0+out→0+ by comparing with the carrier wave.

An implementation of S102 is not limited here, depending on the application environment. All implementations fall within the protection scope of the present disclosure.

A converter is further provided according to another embodiment of the present disclosure. The converter includes a main circuit and a controller. The main circuit includes at least one ANPC circuit. The ANPC circuit has a structure as shown in FIG. 1, and includes six switching transistors (shown as S1 to S6), and each of the switching transistors has a freewheeling diode (shown as D1 to D6). A first switching transistor S1, a second switching transistor S2, a third switching transistor S3, and a fourth switching transistor S4 are connected in series in sequence. A terminal of the first switching transistor S1 is connected to a positive electrode P of a direct-current side of the ANPC circuit, and a terminal of the fourth switching transistor S4 is connected to a negative electrode N of the direct-current side of the ANPC circuit. The first switching transistor S1 and the fourth switching transistor S4 serve as two outer transistors of the ANPC circuit. A connection point of the second switching transistor S2 and the third switching transistor S3 is connected to an alternating-current side of the ANPC circuit (having an output voltage Vout). The second switching transistor S2 and the third switching transistor S3 serve as two inner transistors of the ANPC circuit. A connection point of the first switching transistor S1 and the second switching transistor S2 is connected to a neutral point O of the direct-current side of the ANPC circuit via a fifth switching transistor S5. A connection point of the third switching transistor S3 and the fourth switching transistor S4 is connected to the neutral point O of the direct-current side of the ANPC circuit via a sixth switching transistor S6. The fifth switching transistor S5 and the sixth switching transistor S6 serve as two clamping transistors of the ANPC circuit.

The main circuit may include only one ANPC circuit, forming a single-phase converter. Alternatively, a quantity of the ANPC circuit in the main circuit is three, direct-current sides of the three ANPC circuits are connected in parallel to each other, and the alternating-current side of each of the ANPC circuits serves as a phase of the alternating-current side of the main circuit, forming a three-phase converter. The converter may be an inverter, a rectifier, or an apparatus including at least two stages of conversion circuits, one of which is the ANPC circuit. The converter is not limited here. All the implementations fall within the protection scope of the present disclosure.

The main circuit is controlled by the controller. The controller is configured to perform the method for driving an ANPC circuit of a converter as described in any of the above embodiments. The process and principle of the method for driving an ANPC circuit of a converter may be referred to the above embodiments and is not repeated here.

By performing the method for driving an ANPC circuit, the controller may balance the switching losses of the inner transistor and the outer transistor by modifying an on-off sequence of the switching transistors, balance of the on-state loss by turning on a suitable switching transistor, so that the converter is capable of balancing the switching losses and actively balancing the on-state losses, reducing the balancing granularity of the switching loss, and having low loss fluctuation.

The same and similar parts among the embodiments in the specification may be referred to each other. Each of the embodiments focuses on its differences from the other embodiments. The system or system embodiments are essentially similar to the method embodiments, and therefore are described in brief. Reference may be made to the description of the method embodiments for relevant details of the system or system embodiments. The systems and system embodiments described above are only illustrative. The units described as separate components may or may not be physically separated. Components shown as units may or may not be a physical unit, that is, the components may be located at a same position or distributed over multiple network units. Some or all of the modules may be adopted as needed to achieve the objective of the solutions in the embodiments of the present disclosure. Those skilled in the art can understand and implement the embodiments without any creative effort.

Those skilled in the art may further understand that, units and algorithm steps described in conjunction with the embodiments disclosed herein may be realized by electronic hardware, computer software or a combination thereof. In order to clearly describe interchangeability of the hardware and the software, the composition and steps of each embodiment are generally described above based on functions. Whether these functions are to be implemented by hardware or software depend on a particular application of the technical solutions and a design constraint. Those skilled in the art may implement the described functions through different methods for each specific application. Such implementation should not be considered going beyond the scope of the present disclosure.

For the above description of the disclosed embodiments, the features recorded in the embodiments in this specification may be replaced or combined with each other so as to enable those skilled in the art to implement or use the present disclosure. Various modifications to the embodiments are apparent to those skilled in the art, and the generic principles defined herein may be practiced in other embodiments without departing from the spirit or scope of the present disclosure. Therefore, the present disclosure is not limited to the embodiments shown herein but is conformed to the widest scope consistent with the principles and novel features disclosed herein.

## Claims

1. A method for driving an ANPC circuit of a converter, comprising:
determining an output state switching sequence of the ANPC circuit, aiming at an inner transistor and an outer transistor among switching transistors in the ANPC circuit of the converter bearing a switching loss within two half switching cycles of a switching cycle, respectively; and
generating control signals for the switching transistors in the ANPC circuit based on the output state switching sequence, and outputting the control signals.

2. The method for driving an ANPC circuit of a converter according to claim 1, wherein the determining an output state switching sequence of the ANPC circuit, aiming at an inner transistor and an outer transistor among switching transistors in the ANPC circuit of the converter bearing a switching loss within two half switching cycles of a switching cycle, respectively comprises:
determining zero-level output states of the output state switching sequence within the two half switching cycles of the switching cycle of the ANPC circuit, the zero-level output states comprising a first zero-level output state in which the inner transistor bears the switching loss and a second zero-level output state in which the outer transistor bears the switching loss.

3. The method for driving an ANPC circuit of a converter according to claim 1, wherein before the determining an output state switching sequence of the ANPC circuit, the method further comprises:
combining with an objective of balancing an on-state loss borne by the inner transistor.

4. The method for driving an ANPC circuit of a converter according to claim 3, wherein the determining an output state switching sequence of the ANPC circuit, aiming at an inner transistor and an outer transistor among switching transistors in the ANPC circuit of the converter bearing a switching loss within two half switching cycles of a switching cycle, respectively comprises:
determining zero-level output states of the output state switching sequence within the two half switching cycles of the switching cycle of the ANPC circuit, the zero-level output states comprising a first zero-level output state in which the inner transistor bears the switching loss, a second zero-level output state in which the outer transistor bears the switching loss, and a third zero-level output state in which a phase current flows into or flows out of a bridge arm through two parallel-connected branches.

5. The method for driving an ANPC circuit of a converter according to claim 4, wherein in the ANPC circuit,
a quantity of the outer transistor is two, and the two outer transistors comprise a first switching transistor connected to a positive electrode of a direct-current side, and a fourth switching transistor connected to a negative electrode of the direct-current side;
a quantity of the inner transistor is two, and the two inner transistors comprise a second switching transistor connected between the first switching transistor and an alternating-current side, and a third switching transistor connected between the alternating-current side and the fourth switching transistor; and
a quantity of a clamping transistor is two, and the two clamping transistors comprise a fifth switching transistor connected between the first switching transistor and a neutral point of the direct-current side, and a sixth switching transistor connected between the neutral point of the direct-current side and the fourth switching transistor, wherein
within a positive half-cycle of an output voltage of the alternating-current side of the ANPC circuit, in the first zero-level output state, the first switching transistor, the third switching transistor and the sixth switching transistor are on, and the other switching transistors are off; and
within a negative half-cycle of the output voltage of the alternating-current side of the ANPC circuit, in the first zero-level output state, the second switching transistor, the fourth switching transistor and the fifth switching transistor are on, and the other switching transistors are off.

6. The method for driving an ANPC circuit of a converter according to claim 4, wherein in the ANPC circuit,
a quantity of the outer transistor is two, and the two outer transistors comprise a first switching transistor connected to a positive electrode of a direct-current side, and a fourth switching transistor connected to a negative electrode of the direct-current side;
a quantity of the inner transistor is two, and the two inner transistors comprise a second switching transistor connected between the first switching transistor and an alternating-current side, and a third switching transistor connected between the alternating-current side and the fourth switching transistor; and
a quantity of a clamping transistor is two, and the two clamping transistors comprise a fifth switching transistor connected between the first switching transistor and a neutral point of the direct-current side, and a sixth switching transistor connected between the neutral point of the direct-current side and the fourth switching transistor, wherein
within a positive half-cycle of an output voltage of the alternating-current side of the ANPC circuit, in the second zero-level output state, the second switching transistor, the third switching transistor and the sixth switching transistor are on, and the other switching transistors are off; and
within a negative half-cycle of the output voltage of the alternating-current side of the ANPC circuit, in the second zero-level output state, the second switching transistor, the third switching transistor and the fifth switching transistor are on, and the other switching transistors are off.

7. The method for driving an ANPC circuit of a converter according to claim 4, wherein in the ANPC circuit,
a quantity of the outer transistor is two, and the two outer transistors comprise a first switching transistor connected to a positive electrode of a direct-current side, and a fourth switching transistor connected to a negative electrode of the direct-current side;
a quantity of the inner transistor is two, and the two inner transistors comprise a second switching transistor connected between the first switching transistor and an alternating-current side, and a third switching transistor connected between the alternating-current side and the fourth switching transistor; and
a quantity of a clamping transistor is two, and the two clamping transistors comprise a fifth switching transistor connected between the first switching transistor and a neutral point of the direct-current side, and a sixth switching transistor connected between the neutral point of the direct-current side and the fourth switching transistor, wherein
within a positive half-cycle of an output voltage of the alternating-current side of the ANPC circuit, in the third zero-level output state, the third switching transistor, the fifth switching transistor and the sixth switching transistor are on, and the other switching transistors are off; and
within a negative half-cycle of the output voltage of the alternating-current side of the ANPC circuit, in the third zero-level output state, the second switching transistor, the fifth switching transistor and the sixth switching transistor are on, and the other switching transistors are off.

8. The method for driving an ANPC circuit of a converter according to claim 4, wherein the output state switching sequence indicates that:
the third zero-level output state, the first zero-level output state, a positive level output state or a negative level output state, the second zero-level output state, and the third zero-level output state appear in sequence; or
the third zero-level output state, the second zero-level output state, a positive level output state or a negative level output state, the first zero-level output state, and the third zero-level output state appear in sequence.

9. The method for driving an ANPC circuit of a converter according to claim 4, wherein
the phase current flows into the bridge arm through two parallel-connected branches in the third zero-level output state within a positive half-cycle of an output voltage of an alternating-current side of the ANPC circuit; and
the phase current flows out of the bridge arm through two parallel-connected branches in the third zero-level output state within a negative half-cycle of the output voltage of the alternating-current side of the ANPC circuit.

10. The method for driving an ANPC circuit of a converter according to any one of claims 1 to 9, wherein the generating control signals for switching transistors in the ANPC circuit based on the output state switching sequence, and outputting the control signals comprises:
generating, for each of the switching transistors in the ANPC circuit, the control signal for the switching transistor based on on-off states of the switching transistor in the respective output states in the output state switching sequence, and outputting the control signals; or
generating, for each of the switching transistors in the ANPC circuit, the control signal for the switching transistor by comparing with a carrier wave, aiming at achieving the output state switching sequence, and outputting the control signals.

11. A converter, comprising:
a main circuit; and
a controller; wherein
the main circuit comprises at least one (ANPC) circuit; and
the main circuit is controlled by the controller, and the controller is configured to perform the method for driving an ANPC circuit of a converter according to any one of claims 1 to 10.

12. The converter according to claim 11, wherein a quantity of the switching transistors in the ANPC circuit is six, wherein
a first switching transistor, a second switching transistor, a third switching transistor, and a fourth switching transistor among the six switching transistors are connected in series in sequence;
a terminal of the first switching transistor is connected to a positive electrode of a direct-current side of the ANPC circuit, and a terminal of the fourth switching transistor is connected to a negative electrode of the direct-current side of the ANPC circuit; the first switching transistor and the fourth switching transistor serve as two outer transistors of the ANPC circuit;
a connection point of the second switching transistor and the third switching transistor is connected to an alternating-current side of the ANPC circuit; and the second switching transistor and the third switching transistor serve as two inner transistors of the ANPC circuit; and
a connection point of the first switching transistor and the second switching transistor is connected to a neutral point of the direct-current side of the ANPC circuit via a fifth switching transistor; a connection point of the third switching transistor and the fourth switching transistor is connected to the neutral point of the direct-current side of the ANPC circuit via a sixth switching transistor; and the fifth switching transistor and the sixth switching transistor serve as two clamping transistors of the ANPC circuit.

13. The converter according to claim 11 or 12, wherein a quantity of the ANPC circuit in the main circuit is three; and
direct-current sides of the ANPC circuits are connected in parallel to each other, and the alternating-current side of each of the ANPC circuits serves as a phase of an alternating-current side of the main circuit.
